# FASCICULE DE BREVET EUROPEEN

(11) **EP 0 611 178 B1**
(45) Date de publication et mention de la délivrance du brevet: **09.10.1996**
(21) Numéro de dépôt: 94400121.3
(22) Date de dépôt: 20.01.1994
(51) Int. Cl.: G09F 9/35

(54) **Dispositif d'affichage à cristaux liquides comprenant un réseau de points images**
Flüssigkristall-Anzeigevorrichtung mit einer Bildelementen-Matrix
Liquid crystal display device having a network of image pixels

(30) Priorité: 12.02.1993 FR 9301589
(43) Date de publication de la demande: 17.08.1994
(73) Titulaire: SAGEM-SOURIAU SYSTEMES, 75116 Paris (FR)
(72) Inventeur: Boisdron, Jean-François, F-75013 Paris (FR); Chaudagne, Michel, F-78320 Le Mesnil St Denis (FR)
(74) Mandataire: Keib, Gérard

(56) Documents cités:
- DE-A- 3 705 804
- FR-A- 2 656 451
- US-A- 4 408 836
- PATENT ABSTRACTS OF JAPAN vol. 8, no. 33 (P-254) 14 Février 1984 & JP-A-58 189 614 (SHARP)

## Description

La présente invention a pour objet un dispositif d'affichage à cristaux liquides comprenant un réseau de points images, et comportant un assemblage d'au moins un premier et un deuxième éléments comportant chacun une première et une deuxième face opposée à la première face.

Un dispositif de ce type est connu de la demande de brevet français N°2 656 451 déposé le 21 décembre 1990 par la société MITSUBISHI.

Ce dispositif d'affichage forme un réseau par assemblage bord-à-bord d'une pluralité de panneaux à cristal liquide. En outre, un substrat d'électrode comportant des lignes de bus de données et des lignes de bus de commande de grille est mis en oeuvre pour réaliser les interconnexions.

Ce dispositif présente plusieurs inconvénients et notamment des irrégularités dans le pas des points images (ou pixels).

Actuellement, on ne sait conserver un pas rigoureusement constant entre les pixels d'un dispositif d'affichage à cristaux liquides en réseau qu'en utilisant un seul élément, mais alors les dimensions maximales sont limitées à 300 mm sur 400 mm en raison des limites technologiques actuelles.

Il est par ailleurs connu de réaliser des dispositifs d'affichage à cristaux liquides de grande dimension mais uniquement à base de modules alpha-numérique ou de type mosaïque qui s'assemblent en X comme en Y de manière à constituer un système d'affichage alpha-numérique de grande dimension. En effet, dans de tels systèmes d'affichage, une irrégularité de pas entre les modules alpha-numérique assemblés n'est pratiquement pas perceptible.

Le brevet US 4 808 836 a pour objet un panneau d'affichage dont la continuité électrique entre ses modules LCD est obtenue par des contacts situés hors des zones actives d'affichage constituées par des électrodes. Cette disposition a également pour but de maintenir une planéité constante entre les modules (col 3 - lignes.3 à 13). Ce panneau présente l'inconvénient de ne pas s'appliquer à un panneau graphique à pas constant en raison notamment de la présence nécessaire d'un cache.

Il n'existe pas à l'heure actuelle de dispositif d'affichage de grande dimension mettant en oeuvre des cristaux liquides, notamment pour des applications d'affichage urbain, d'affichage de gare ou d'aéroport etc... en dépit des avantages évidents des cristaux liquides (notamment consommation et fiabilité) sur les afficheurs connus dans ces applications (notamment afficheur à diodes électro-luminescentes ou afficheur électromagnétique).

L'invention concerne donc un dispositif d'affichage à cristaux liquides comprenant un réseau de points images permettant de réaliser un afficheur de grande dimension de type graphique.

Le dispositif d'affichage selon l'invention est dans ce but caractérisé en ce qu'il comporte au moins un premier et un deuxième élément d'affichage assemblés à recouvrement entre des extrémités des éléments de manière à maintenir un pas constant entre les points images, lesdits éléments présentant une première extrémité de connexion électrique comportant des contacts électriques disposés sur la première face desdits éléments, et une deuxième extrémité opposée à la première extrémité, le recouvrement s'effectuant entre la deuxième extrémité de la première face du premier élément et la première extrémité de la deuxième face du deuxième élément.
Le recouvrement précité permet, grâce à une disposition des éléments à la manière des "tuiles" d'un toit, de compenser la largeur supplémentaire due à la présence d'une zone de connexion électrique sur un bord des éléments à cristaux liquides.

La première face du dispositif peut comporter un décrochement qui la prolonge et qui comporte lesdits contacts électriques.

Chaque élément peut être réalisé de manière connue en soi sous forme de deux plaques de verre scellées entre elles entre lesquelles est emprisonné un élément à cristaux liquides.

Chaque élément peut comporter avantageusement une matrice élémentaire de points images. Ceux-ci peuvent être adressés électriquement soit individuellement, soit de manière matricielle.

Selon un mode de réalisation préféré, les premières extrémités d'au moins certains des éléments sont disposées en butée sur une face latérale correspondante d'un boîtier.

Les éléments peuvent être avantageusement parallèles entre eux.

Le dispositif d'affichage selon l'invention peut constituer une matrice d'éléments à deux dimensions dans laquelle les éléments sont en recouvrement dans une dimension et sont disposés bord-à-bord dans l'autre dimension. Ceci conduit à un montage des éléments tels les tuiles d'un toit de maniére que l'on retrouve toujours le même pas d'un pixel à l'autre en X comme en Y aussi bien au sein d'un même élément qu'au passage d'un élément à un autre dans l'une ou l'autre dimension.

Le dispositif selon l'invention peut être également caractérisé en ce que les éléments d'affichage sont montés dans des boîtiers assemblés entre eux dans un châssis de manière à présenter un jeu J dans la direction de recouvrement pour permettre un démontage d'un seul boîtier par desserrage de deux boîtiers adjacents dans ladite direction.

Les caractéristiques et avantages de l'invention apparaîtront mieux à la lecture de la description qui va suivre donnée à titre d'exemple non limitatif en liaison avec les dessins qui représentent :
- la figure 1a une vue de dessus d'un élément à cristaux liquides de type connu ;
- la figure 1b une vue latérale d'un tel élément, l'espacement entre les glaces étant fortement exagéré dans un but de clarté des dessins ;
- la figure 2 une vue latérale d'un dispositif d'affichage à cristaux liquides selon un mode préféré de réalisation de l'invention à partir d'éléments selon les figures 1a et 1b ;
- la figure 3 une vue schématique de dessus d'un dispositif d'affichage selon la figure 2 ;
- la figure 4, un mode de réalisation préféré d'un dispositif tel que celui de la figure 2 ;
- la figure 5 étant une vue en plan du dispositif de la figure 4.

Selon la figure 1a, un élément à cristaux liquides comporte des pixels 10 arrangés en lignes et colonnes ici (4 fois 4) qui sont interconnectés entre eux par des connexions de ligne 6 et des interconnections de colonne 7. Ces lignes de connexion 6 et 7 se prolongent jusqu'à un élément de connecteur 3 portant des contacts électriques situés sur une bord 2 de l'élément 1. Ce bord 2 est plus large que le bord opposé 4 et les bords latéraux 5 qui ne présentent pas eux de contact électrique.

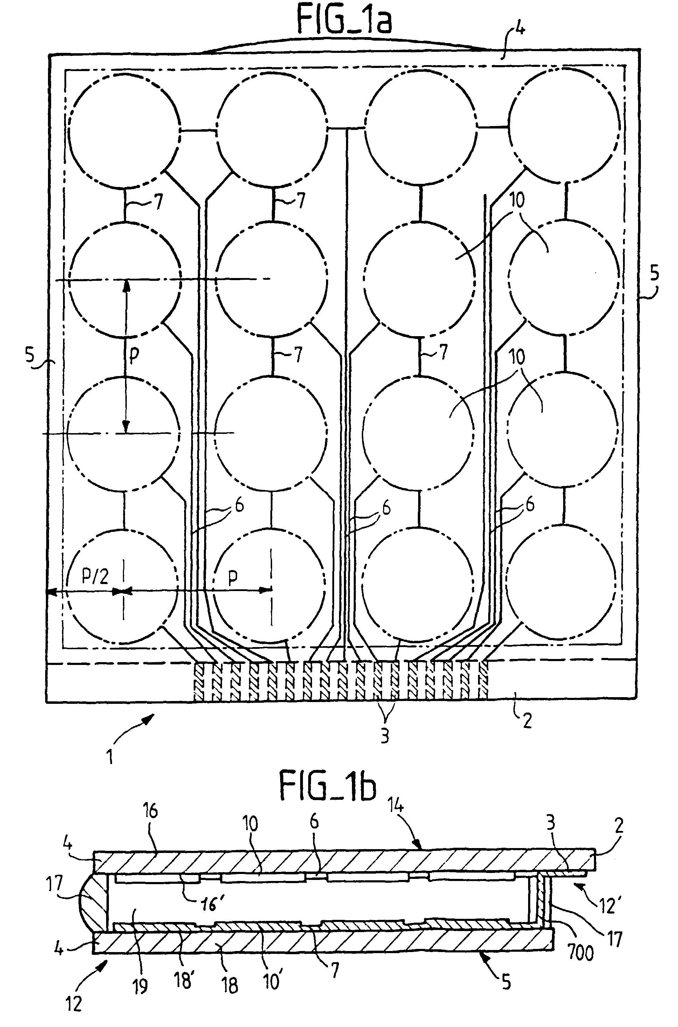

Selon la figure 1b, un élément à cristaux liquides comporte deux glaces 16 et 18 d'épaisseur de l'ordre de 1 mm et espacées entre elles de quelques microns par un joint de scellement périphérique en résine époxy formant entretoise 17 et à l'intérieur du périmètre duquel est disposé un élément à cristaux liquides 19 dont la polarisation change en fonction du champ électrique pour réaliser la matrice précitée. Les contacts électriques 3 sont situés sur la face 16' de la glace 16, dans un prolongement 12' en décrochement de la face 12 de la glace 18. Sur la face interne de la glace 16, sont disposées N anodes 10 présentant chacune une piste conductrice 6 (encre conductrice) reliée à un des contacts 3. Sur la face interne 18' de la glace 18, les N points cathode 10' sont reliés ensemble par les pistes conductrices 7, reliées ensemble à un des contacts 3 par un fil souple 700. Dans cette version, les points images de la matrice, définis par les anodes 10, sont adressés un par un. Il est connu par ailleurs de réaliser un adressage de type matriciel.

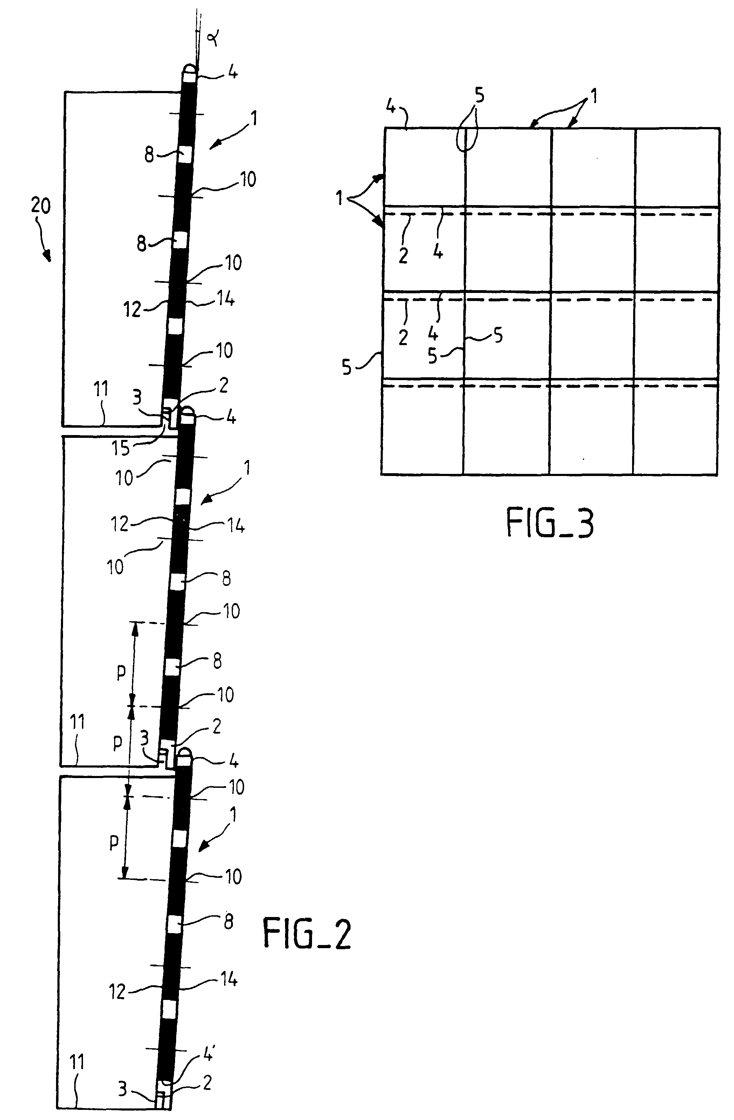

Comme le montrent les figures 2 et 3, les éléments 1 sont montés à recouvrement entre eux de manière à conserver un pas p constant entre les pixels 10. Ce recouvrement s'effectue en superposant la face 12 d'un élément 1 au niveau de son extrémité 4 à la face 14 d'un élément adjacent au niveau de son extrémité de connexion 2. Dans l'exemple représenté, l'extrémité 2 de chacun des éléments est en butée sur un bord latéral 11 d'un boîtier 20 ce qui fixe leur position. Les extrémités 2 sont maintenues par un rebord 15 s'étendant depuis ce bord latéral 11. Ce montage en forme de tuile de toit introduit un léger angle de parallaxe α qui est peu gênant en pratique. De tels écrans de grande dimension sont en effet destinés en particulier à des afficheurs urbains ou des afficheurs de gare ou d'aéroport qui sont disposés au dessus des utilisateurs. En outre étant donné que l'angle est le même pour tous les éléments, ceux-ci restent parallèles entre eux.

Dans les figures 2 et 3 on a montré le recouvrement des éléments 1 dans une seule direction c'est-à-dire que les éléments 1 d'une même colonne sont montés à recouvrement alors qu'entre les colonnes, les éléments sont disposés bord-à-bord par leurs bords latéraux 5. De la sorte, le pas p est conservé dans les deux directions.

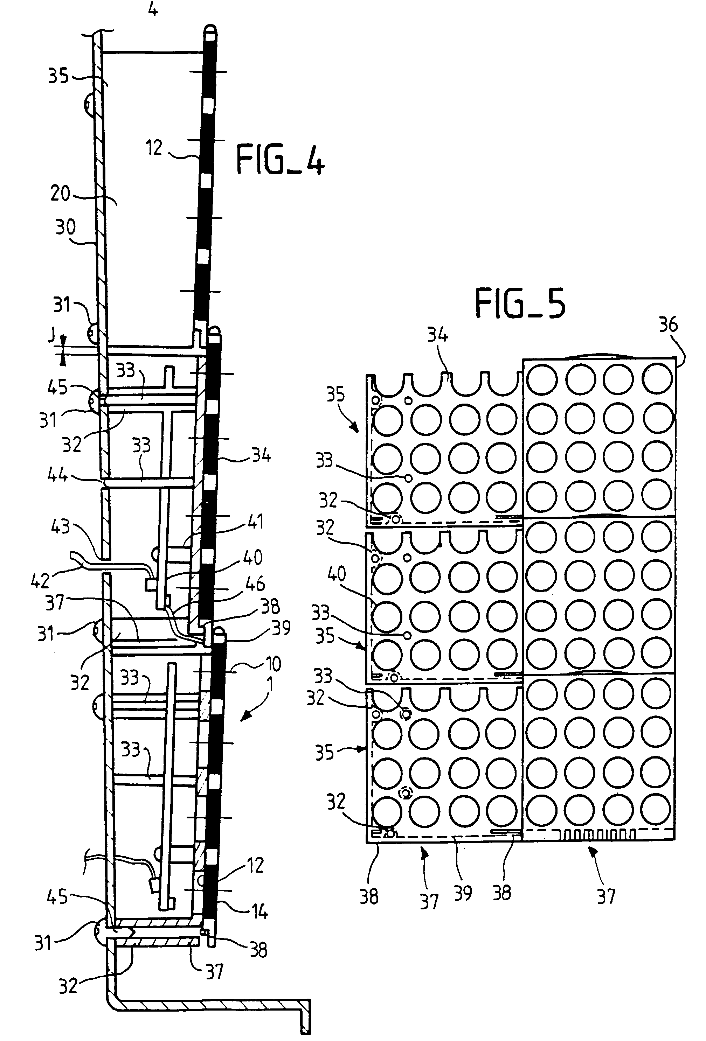

Nous allons maintenant décrire les figures 4 et 5.

Les boîtiers sont constitués d'une face supérieure 34 supportant deux éléments glaces, et de trois parois latérales (inférieure 37, gauche 35 et droite 36), et ils sont montés dans un châssis 30.

La face supérieure est percée de trous 40 le permettant de laisser passer la lumière d'un éclairage arrière de chacun des pixels. Elle possède, en face avant, des nervures de positionnement 38 des glaces, et sur sa face arrière, des tiges de positionnement 33 sur le châssis 30, ainsi que des entretoises 41 pour la fixation du circuit imprimé 40 supportant les composants de contrôle des afficheurs.

La face latérale inférieure 37 possède une découpe 39 pour le passage d'un circuit souple 46 reliant la glace et le circuit imprimé.

Des entretoises 32 pour la fixation des boîtiers sur le châssis 30 partent de la face supérieure du boîtier et font partie des parois latérales.

Le châssis 30 de fixation des boîtiers présente des trous 45 de fixation des boîtiers par des vis 31, des trous 44 de positionnement des boîtiers et des trous 43 de passage des câbles 42 de raccordement des circuits imprimés de commande des éléments d'affichage vers l'électronique de pilotage du panneau.

Comme illustré en figure 2, les éléments 1 sont fixés, par exemple par collage de leur face inférieure 12, sur les boîtiers 20. Les boîtiers 20 possèdent un dispositif de fixation comportant d'une part des entretoises 32 et des tiges de positionnement 33 permettant le positionnement des boîtiers 20 sur le châssis 30 par des vis 31. Les boîtiers 20 sont fixés un à un sur le châssis par les vis 31 en partant du boîtier supérieur, les tiges de positionnement 33 permettant de respecter le pas p constant dans le sens vertical. Pour leur démontage, et en particulier dans le cas où l'un des boîtiers devrait être remplacé, un simple desserrage des boîtiers qui lui sont supérieurs et inférieurs autorise par le jeu J subsistant entre les boîtiers, l'extraction du boîtier à remplacer. Le jeu J correspond au dimensionnement des boîtiers en fonction du pas p des points images 2 de façon à permettre ce démontage. Par exemple, le jeu J est égal à la moitié de la longueur en recouvrement entre deux éléments d'affichage.

## Revendications

1. Dispositif d'affichage à cristaux liquides comprenant un réseau de points image (10) comportant un assemblage d'au moins un premier et un deuxième éléments d'affichage (1) comportant chacun une première et une deuxième face opposée à la première face, caractérisé en ce que ledit assemblage est réalisé à recouvrement entre des extrémités (2, 4) des éléments (1) de manière à maintenir un pas constant entre les points images (10), lesdits éléments (1) présentant une première extrémité (2) de connexion électrique comportant des contacts électriques (3) disposés sur la première face (12) desdits éléments (1) et une deuxième extrémité (4) opposée à la première extrémité (2) et en ce que le recouvrement s'effectue entre la deuxième extrémité (4) de la première face (12) du premier élément (1) et la première extrémité (2) de la deuxième face (14) du deuxième élément (1).

2. Dispositif selon la revendication 1 caractérisé en ce que la première face (12) du dispositif comporte un décrochement (12') qui la prolonge et qui comporte lesdits contacts électriques (3).

3. Dispositif d'affichage selon une des revendications 1 à 2, caractérisé en ce que chaque élément (1) comporte deux plaques de verre (16, 18) scellées entre elles (17) et entre lesquelles est emprisonné un élément à cristaux liquides (19).

4. Dispositif d'affichage selon l'une des revendications 1 à 3 , caractérisé en ce que chaque élément (1) comporte une matrice élémentaire de points images (20).

5. Dispositif d'affichage selon l'une des revendications précédentes, caractérisé en ce que les premières extrémités (2) d'au moins certain des éléments (1) sont disposées en butée sur une face latérale (11) correspondante d'un boîtier (20).

6. Dispositif d'affichage selon l'une des revendications précédentes, caractérisé en ce que les éléments (1) sont parallèles entre eux.

7. Dispositif d'affichage selon l'une des revendications précédentes caractérisé en ce qu'il constitue une matrice d'éléments (1) à deux dimensions, dans lesquelles les éléments (1) sont à recouvrement dans une dimension et sont disposés bord-à-bord dans l'autre dimension.

8. Dispositif d'affichage selon une des revendications précédentes, caractérisé en ce que les éléments d'affichage (1) sont montés dans des boîtiers assemblés entre eux dans un châssis (30) de manière à présenter un jeu (J) dans la direction de recouvrement pour permettre un démontage d'un seul boîtier par desserrage de deux boîtiers adjacents dans ladite direction.

## Patentansprüche

1. Flüssigkristall-Anzeigevorrichtung mit einem Gitter aus Bildpunkten (10), die einen Verband von wenigstens einem ersten und einem zweiten Anzeigeelement (1) umfaßt, jedes mit einer ersten Fläche und einer der ersten Fläche entgegengesetzten zweiten Fläche, dadurch gekennzeichnet, daß der-Verband durch überlappung zwischen den Rändern (2, 4) der Elemente (1) ausgeführt ist, derart, daß ein konstanter Abstand zwischen den Bildpunkten (10) beibehalten wird, wobei die Elemente (1) einen ersten Rand (2) für eine elektrische Verbindung, der auf der ersten Fläche (12) der Elemente (1) angeordnete elektrische Kontakte (3) umfaßt, und einen dem ersten Rand (2) gegenüberliegenden zweiten Rand (4) aufweisen, und daß die Überlappung zwischen dem zweiten Rand (4) der ersten Fläche (12) des ersten Elementes (1) und dem ersten Rand (2) der zweiten Fläche (14) des zweiten Elementes (1) erfolgt.

2. Vorrichtung gemäß Anspruch 1, dadurch gekennzeichnet, daß die erste Fläche (12) der Vorrichtung einen Absatz (12') umfaßt, der diese verlängert und der die elektrischen Kontakte (3) umfaßt.

3. Anzeigevorrichtung nach einem der Ansprüche 1 bis 2, dadurch gekennzeichnet, daß jedes Element (1) zwei Glasplatten (16, 18) aufweist, die miteinander (17) versiegelt sind und zwischen denen ein Flüssigkristallelement (19) eingeschlossen ist.

4. Anzeigevorrichtung nach einem der Ansprüche 1 bis 3, dadurch gekennzeichnet, daß jedes Element (1) eine Grundmatrix aus Bildpunkten (20) umfaßt.

5. Anzeigevorrichtung nach einem der vorstehenden Ansprüche, dadurch gekennzeichnet, daß die ersten Ränder (2) von wenigstens einigen der Elemente (1) in Auflage auf einer entsprechenden Seitenfläche (11) eines Gehäuses (20) angeordnet sind.

6. Anzeigevorrichtung nach einem der vorstehenden Ansprüche, dadurch gekennzeichnet, daß die Elemente (1) untereinander parallel sind.

7. Anzeigevorrichtung nach einem der vorstehenden Ansprüche, dadurch gekennzeichnet, daß sie eine zweidimensionale Elementenmatrix (1) bildet, in welcher die Elemente (1) in einer Dimension überlappt sind und in der anderen Dimension Seite an Seite angeordnet sind.

8. Anzeigevorrichtung nach einem der vorstehenden Ansprüche, dadurch gekennzeichnet, daß die Anzeigeelemente (1) in den Gehäusen miteinander in einem Rahmen (30) derart zusammengesetzt angebracht sind, daß sie in Überlappungsrichtung ein Spiel (J) aufweisen, um einen Ausbau eines einzelnen Gehäuses durch Lockerung von zwei in dieser Richtung benachbarten Gehäusen zu gestatten.

## Claims

1. Liquid crystal display device having a network of image pixels (10) comprising an assembly of at least one first and one second display elements (1) each comprising a first face and a second face opposite to the first face, characterised in that the said assembly is produced by overlapping the ends (2, 4) of the elements (1) in such a way as to maintain a constant distance between the image pixels (10), the said elements (1) having a first end (2) for electrical connection comprising electrical contacts (3) disposed on the first face (12) of the said elements (1) and a second end (4) opposite to the first end (2), and in that the overlapping is produced between the second end (4) of the first face (12) of the first element (1) and the first end (2) of the second face (14) of the second element (1).

2. Device according to claim 1, characterised in that the first face (12) of the device comprises a stepped region (12') which extends it and which comprises the said electrical contacts (3).

3. Display device according to any of claims 1 to 2, characterised in that each element (1) comprises two glass plates (16, 18) with a seal (17) between them, between which plates a liquid crystal element (19) is enclosed.

4. Display device according to any of claims 1 to 3, characterised in that each element (1) comprises an elementary matrix of image pixels (20).

5. Display device according to any of the preceding claims, characterised in that the first ends (2) of at least some of the elements (1) are disposed in abutment on a corresponding lateral face (11) of a casing (20).

6. Display device according to any of the preceding claims, characterised in that the elements (1) are parallel to each other.

7. Display device according to any of the preceding claims, characterised in that it comprises a matrix of elements (1) in two dimensions, in which the elements (1) are overlapping in one dimension and are disposed edge to edge in the other dimension.

8. Display device according to any of the preceding claims, characterised in that the display elements (1) are mounted in casings assembled together in a frame (30) in such a way as to present a group (J) in the overlapping direction to permit detachment of a single casing by releasing the two casings which are adjacent in the said direction.
